# EUROPÄISCHE PATENTANMELDUNG

(11) **EP 4 563 443 A1**
(43) Veröffentlichungstag der Anmeldung: **04.06.2025**
(21) Anmeldenummer: 24215264.3
(22) Anmeldetag: 25.11.2024
(51) Int. Cl.: B62D 1/181

(54) **VERFAHREN ZUM BETRIEB EINER ELEKTRISCHEN LENKSÄULENVERSTELLEINRICHTUNG, LENKSÄULENVERSTELLEINRICHTUNG, STEUEREINHEIT UND KRAFTFAHRZEUG**

(30) Priorität: 30.11.2023 BE 202305975
(71) Anmelder: thyssenkrupp Presta Aktiengesellschaft, 9492 Eschen (LI); thyssenkrupp AG, 45143 Essen (DE)
(72) Erfinder: Vitalis, Daniel, 9468 Sax (CH); Riedmann, Patrick, 6850 Dornbirn (AT); Dési, Gergely, 1142 Budapest (HU); Willi, Andreas, 6923 Lauterach (AT)
(74) Vertreter: thyssenkrupp Intellectual Property GmbH

(57) **Zusammenfassung**

Die zu Grunde liegende Erfindung betrifft ein Verfahren zum Betrieb einer elektrischen Lenksäulenverstelleinrichtung (3), wobei die Lenksäulenverstelleinrichtung (3) einen zur Verstellung einer Position einer oder mehrerer Komponenten (2, 6) einer Lenksäule (2) eines Kraftfahrzeugs eingerichteten elektrischen Aktuator (4)eine Steuerungseinheit (5) zur Aktivierungssteuerung des zumindest einen Aktuators (4) aufweist. Das Verfahren umfasst die folgenden Schritte:
- Erkennen (201), durch die Steuerungseinheit (5), eines Übergangs des Aktuators (4) von einem deaktivierten Zustand zu einem Aktivierungszustand, in welchem der Aktuator (4) zum Zwecke der Verstellung der Position betrieben wird bzw. betreibbar ist, und
- Deaktivieren des Aktuators (4) durch die Steuerungseinheit (5), sobald eine Dauer des Aktivierungszustands einen vorgegebenen Grenzwert überschreitet.

Des Weiteren betrifft die Erfindung eine Steuereinheit zur Ausführung eines solchen Verfahrens sowie eine für den Betrieb gemäß einem solchen Verfahren ausgebildete Lenksäulenverstelleinrichtung und ein Kraftfahrzeug mit einer solchen Steuereinheit bzw. einer solchen Lenksäulenverstelleinrichtung.

## Beschreibung

Die zu Grunde liegende Erfindung betrifft ein Verfahren zum Betrieb einer elektrischen Lenksäulenverstelleinrichtung, eine Lenksäulenverstelleinrichtung, eine Steuereinheit und ein Kraftfahrzeug.

Bei Kraftfahrzeugen bildet die Lenksäule üblicherweise das Bindeglied zwischen dem Lenkrad einerseits und dem Lenkgetriebe bzw. Komponenten zur Übersetzung der Lenkbewegung des Lenkrads in eine entsprechende Lenkbewegung der gelenkten Räder andererseits.

Im Zusammenhang mit Komfortfunktionen zur Einstellung bzw. Verstellung von Position oder Lage von Interieurkomponenten, wie Sitz, Lenkrad usw. werden zunehmend auch elektrische Verstelleinrichtungen umgesetzt, die eine motorisierte Einstellung bzw. Verstellung jeweiliger Komponenten ermöglichen. Hinsichtlich der Zuverlässigkeit und Betriebssicherheit solcher elektrischeren Komfortfunktionen und zugehörigen elektrischen Antrieben gibt es, insbesondere auch bei Lenksäulenverstelleinrichtungen, noch Verbesserungsbedarf.

Der vorliegenden Erfindung liegt die Aufgabe zu Grunde, ein neues und verbessertes Verfahren zum Betrieb einer elektrischen Lenksäulenverstelleinrichtung bereitzustellen. Unter gleicher Zielsetzung sollen ferner eine
Lenksäulenverstelleinrichtung, eine Steuereinheit und ein Kraftfahrzeug bereitgestellt werden.

Diese Aufgabe wird gelöst durch die unabhängigen Ansprüche. Ausgestaltungen ergeben sich aus den abhängigen Ansprüchen und der nachfolgenden Beschreibung.

Nach einer Ausgestaltung ist ein Verfahren zum Betrieb einer elektrischen Lenksäulenverstelleinrichtung eines Kraftfahrzeugs vorgesehen. Unter einer Lenksäulenverstelleinrichtung soll insbesondere eine Vorrichtung verstanden werden, die dazu eingerichtet und vorgesehen ist, bei Kraftfahrzeugen, die Lenksäule bzw. Komponenten der Lenksäule elektromotorisch einzustellen bzw. zu verstellen. Der Begriff "Verstellen" bedeutet insbesondere, dass die Lenksäule und/oder Komponenten derselben, wie z.B. das Lenkrad, in deren Position, Lage und/oder Ausrichtung verändert werden, insbesondere benutzerspezifisch verändert werden, insbesondere relativ zum Chassis des Kraftfahrzeugs oder relativ zu weiteren Interieurkomponenten verändert werden, wie z.B. dem Fahrzeugsitz. Die Formulierung "elektromotorisch verstellen" bedeutet diesem Zusammenhang insbesondere, dass ein oder mehrere elektrisch betriebene Aktuatoren, insbesondere ein oder mehrere Elektromotoren, vorgesehen sind, die mit Komponenten der Lenksäule mechanisch derart gekoppelt sind, dass eine Aktivierung des Aktuators, insbesondere des Elektromotors, eine Änderung von Position, Lage und/oder Ausrichtung der Lenksäule oder Komponenten der Lenksäule bewirkt. Zur Aktivierung des Aktuators kann insbesondere eine entsprechende Benutzerschnittstelle bzw. Betätigungsschnittstelle vorgesehen sein.

Die Benutzerschnittstelle kann insbesondere ein oder mehrere Betätigungseinrichtungen oder Betätigungselemente, insbesondere Schalter, Berührschalter, berührungsempfindliche Elemente und/oder dgl., umfassen.

Erfindungsgemäß umfasst die Lenksäulenverstelleinrichtung
a) zumindest einen zur Verstellung einer Position und/oder Ausrichtung einer oder mehrerer Komponenten einer Lenksäule eines Kraftfahrzeugs eingerichteten elektrischen Aktuator.

Bei dem Aktuator kann es sich um einen Elektromotor handeln. Insbesondere ist der zumindest eine Aktuator so eingerichtet, dass durch diesen bei dessen Aktivierung die Position und/oder Ausrichtung der einen oder mehreren Komponenten verstellbar ist/sind. Eine Aktivierung soll dabei insbesondere als ein Übergang von einem deaktivierten Zustand in einem Aktivierungszustand verstanden werden. Der Aktivierungszustand entspricht dabei, im Unterschied zum deaktivierten Zustand, insbesondere einem Zustand, in welchem der Aktuator entsprechend seiner Aktuatorfunktion Arbeit zur Verstellung der Position und/oder Ausrichtung der Komponente/n, insbesondere der Höhe und/oder dem Abstand zum Fahrzeugsitz usw., verrichten kann.

Die Lenksäulenverstelleinrichtung umfasst ferner
b) zumindest eine Steuerungseinheit zur Aktivierungssteuerung des zumindest einen Aktuators.

Die Steuerungseinheit kann insbesondere einen oder mehrere Prozessoren, insbesondere Mikroprozessoren, umfassen. Auf der zur Aktivierungssteuerung des Aktuators eingerichteten Steuerungseinheit kann insbesondere Programmcode, insbesondere umfassend eine Zustandsmaschine, implementiert sein, wobei die Steuerungseinheit vorteilhafterweise dazu eingerichtet ist, zumindest den Betrieb bzw. die Aktivierung und entsprechend die Deaktivierung des Aktuators zu steuern, und somit insbesondere eine Aktivierungssteuerung auszuführen. Insbesondere kann vorgesehen sein, dass das hierin vorgeschlagene Verfahren und entsprechende Verfahrensschritte Software-basiert durch die Steuerungseinheit ausführbar sind.

Das Verfahren umfasst die folgenden Schritte:
c) Erkennen, durch die Steuerungseinheit, eines Übergangs des Aktuators von einem deaktivierten Zustand zu einem Aktivierungszustand, in welchem der Aktuator zum Zwecke der Verstellung der Position und/oder Ausrichtung betrieben wird bzw. betreibbar ist, und
d) Deaktivieren des Aktuators durch die Steuerungseinheit, sobald eine Dauer des Aktivierungszustands einen vorgegebenen Grenzwert überschreitet.

Vorteilhaferweise wird somit erkannt bzw. erfasst, ob der zumindest eine Aktuator zum Zwecke der Verstellung der Position und/oder Ausrichtung aktiviert wird bzw. werden soll. Das Erfassen bzw. Erkennen des Übergangs des Aktuators in den Aktivierungszustand kann insbesondere anhand eines Signals erkannt werden, das repräsentativ für eine Interaktion eines Benutzers mit einer Benutzerschnittstelle zur Aktivierung des zumindest einen Aktuators ist. Ein entsprechendes Signal kann insbesondere von der Steuerungseinheit unmittelbar erfasst werden, oder das Signal kann der Steuerungseinheit durch eine andere Steuereinheit, insbesondere durch eine übergeordnete Steuereinheit, bereitgestellt werden.

Ferner wird der zumindest eine Aktuator durch die Steuerungseinheit vorteilhafterweise dann deaktiviert, insbesondere stromlos geschaltet oder aus- bzw. abgeschaltet, wenn der Grenzwert für die Dauer des Aktivierungszustands überschritten wird.

Unter den Formulierungen "zumindest ein Aktuator" und "zumindest eine Steuerungseinheit" soll verstanden werden, dass verschiedene Kombinationen von Aktuatoren und Steuerungseinheiten in Frage kommen. Insbesondere kann eine Steuerungseinheit jeweils für nur einen Aktuator vorgesehen sein, d.h. jedem Aktuator ist in dem Fall steuerungstechnisch eine Steuerungseinheit zugeordnet. Möglich ist hingegen auch, dass einer Steuerungseinheit mehrere Aktuatoren zu deren Aktivierungssteuerung zugeordnet sein können. Weist eine Lenksäulenverstelleinrichtung beispielsweise zwei Aktuatoren auf - insbesondere einen zur Verstellung der Höhe und einen zur Verstellung der Länge - so ist es möglich, dass eine einzige Steuerungseinheit für beide Aktuatoren vorhanden ist, oder dass für jeden Aktuator jeweils eine Steuerungseinheit vorhanden ist.

Zur Feststellung der Bedingung, dass die Dauer des Aktivierungszustands, d.h. die zeitliche Dauer des Aktivierungszustands, den Grenzwert überschreitet, kann in einer Ausgestaltung vorgesehen sein, dass die Steuerungseinheit eine zeitliche Differenz zwischen jeweils aktuellem Zeitpunkt und einem festgestellten Zeitpunkt des Übergangs in den Aktivierungszustand ermittelt, die Differenz mit dem Grenzwert vergleicht und bei Überschreiten den Aktuator deaktiviert bzw. abschaltet. Möglich ist auch, dass ein Übergang in den Aktivierungszustand ein Triggersignal erzeugt bzw. bewirkt, und dass die Steuerungseinheit in Reaktion auf das Triggersignal einen Timer oder Zeitgeber initialisiert, wobei die von dem Timer jeweils ermittele Zeit der Dauer des Aktivierungszustands entspricht. Überschreitet die von dem Timer ermittelte Zeit den Grenzwert, was insbesondere durch Vergleich der ermittelten Zeit mit dem Grenzwert festgestellt werden kann, wird der Aktuator vorteilhafterweise deaktiviert.

In Ausgestaltungen kann vorgesehen sein, dass der Grenzwert einer Dauer des Aktivierungszustands von 1 bis 3 Minuten, insbesondere 2 Minuten entspricht. Der Grenzwert kann insbesondere durch Tests, Berechnungen und/oder empirisch ermittelt werden.

Die vorgeschlagene Lösung hat den Vorteil, dass bei unsachgemäßer Bedienung des Lenksäulenverstelleinrichtung, insbesondere bei zu langer Betätigung oder bei langanhaltenden, wiederholten und/oder übermäßigen Betätigungen oder Betätigungsversuchen des Aktuators durch einen Benutzer auf Grund der Deaktivierung des Aktuators eine Überhitzung des Aktuators vermieden werden kann. Ebenfalls kann das vorgeschlagene Verfahren eine Überhitzung des Aktuators verhindern, wenn insbesondere durch einen Systemausfall oder Systemfehler, insbesondere in der Bordelektronik des Kraftfahrzeugs, der Aktuator unangemessen lange, übermäßig oder gar dauerhaft aktiviert würde.

Ein Vorteil des vorgeschlagenen Verfahrens liegt auch darin, dass dieses vergleichsweise einfach und kostengünstig umsetzbar ist. Insbesondere kann das Verfahren Software-basiert auf einem Prozessor oder Mikroprozessor umgesetzt werden, insbesondere auf einer zur Ansteuerung des Aktuators ohnehin vorhandenen Steuerung. Vergleichsweise teure und aufwändige Maßnahmen wie Thermosensoren oder Thermoschalter und dgl. sind vorteilhafterweise nicht erforderlich.

Gemäß einer weiteren vorteilhaften Ausgestaltung kann vorgesehen sein, dass der Übergang in den Aktivierungszustand auf Grundlage eines Ansteuersignals zur Aktivierung des Aktuators erkannt wird. Das Ansteuersignal kann insbesondere ein in der Steuerungseinheit erzeugtes bzw. generiertes Steuerungssignal sein, oder es kann sich um ein von einer anderen Steuereinheit empfangenes Signal, insbesondere ein von einer Benutzerschnittstelle oder Benutzerschnittstellensteuerung empfangenes Signal, handeln.

Gemäß einer weiteren Ausgestaltung kann vorgesehen sein, dass der Aktuator im Schritt d) für ein vorgegebenes Deaktivierungszeitintervall, insbesondere eine vorgegebene Zeitdauer, deaktiviert wird. Insbesondere kann vorgesehen sein, dass nach Feststellen einer Überschreitung des Grenzwerts der Aktuator für das vorgegebene Deaktivierungszeitintervall abgeschaltet wird, d.h. insbesondere für weitere Aktivierungen blockiert wird. Analog zur Ermittlung der Dauer des Aktivierungszustands kann die Dauer des Deaktivierungszeitintervalls durch Ermitteln einer Zeitdifferenz oder basierend auf einem Timer ermittelt werden. Ist das Deaktivierungszeitintervall verstrichen, was insbesondere durch die Steuerungseinheit ermittelt werden kann, wird die Deaktivierung vorteilhafterweise aufgehoben, und der Aktuator steht für weitere Aktivierungen zur Verstellung bzw. Veränderung der Position und/oder Ausrichtung der Lenksäule und/oder deren Komponenten zur Verfügung.

Die vorgeschlagenen Verfahrensschritte können insbesondere iterativ ausgeführt werden. Ist ein Überwachungszyklus zur Überwachung der Dauer des Aktivierungszustands abgeschlossen, kann die Steuereinheit vorteilhafterweise einen neuen Überwachungszyklus starten.

Gemäß einer weiteren vorteilhaften Ausgestaltung kann vorgesehen sein, dass nach einem Zyklus bzw. Überwachungszyklus, der eine Deaktivierung des Aktuators nach Feststellen einer Überschreitung des Grenzwerts und eine Aufhebung der Deaktivierung umfasst, die Steuerungseinheit wieder in einen Modus zurückkehrt, in dem die Dauer des Aktivierungszustands überwacht wird.

Die Deaktivierung hat den Vorteil, dass für den Aktuator nach übermäßiger Betätigung, die durch Überschreiten des Grenzwerts im Schritt d) feststellbar ist, eine Regenerationszeit zur Abkühlung bereitgestellt werden kann. So kann bei geeignet gewähltem Deaktivierungszeitintervall, von insbesondere 3 Minuten, eine übermäßige Erhitzung bzw. Erwärmung eines verwendeten Elektromotors zumindest weitgehend vermieden werden.

In Ausgestaltungen kann vorgesehen sein, dass das Deaktivierungszeitintervall zwischen 2 bis 5 Minuten, insbesondere bei 3 Minuten liegt. Der Grenzwert kann insbesondere durch Tests, Berechnungen und/oder empirisch ermittelt werden.

Gemäß einer weiteren vorteilhaften Ausgestaltung kann, wie oben bereits angemerkt, vorgesehen sein, dass die Dauer des Aktivierungszustands durch die Steuerungseinheit überwacht wird und/oder die Dauer durch einen in der Steuerungseinheit implementierten Betriebszeitzähler, insbesondere Timer oder Zeitgeber, ermittelt wird. Der Betriebszeitzähler kann insbesondere dadurch aktiviert werden, dass die Steuerungseinheit einen Übergang des Aktuators von einem deaktivierten oder inaktiven Zustand in den Aktivierungszustand, d.h. einen Übergang des Betriebszustands des Aktuators von inaktiv zu aktiv, feststellt, und in Reaktion auf diese Feststellung den Betriebszeitzähler aktiviert. Ein Betriebszeitzähler kann vergleichsweise einfach und insbesondere. Software-basiert implementiert werden.

Gemäß einer weiteren vorteilhaften Ausgestaltung kann der Aktivierungszustand eine oder mehrere Aktivierungsphasen des Aktuators umfassen. Eine Aktivierungsphase ist dabei insbesondere zu verstehen als eine Betriebsphase, in welcher der Aktuator zu dessen Betrieb angesteuert wird. Flankiert wird eine Aktivierungsphase durch den Übergang in den Aktivierungszustand und den Übergang in den deaktivierten Zustand des Aktuators.

Insbesondere kann sich der Aktivierungszustand auf lediglich eine Aktivierungsphase beziehen, wobei aufeinanderfolgende Aktivierungsphasen, die je einen Übergang vom deaktivierten Zustand in den Aktivierungszustand umfassen, hinsichtlich der Überschreitung des Grenzwerts jeweils gesondert überwacht bzw. betrachtet werden. In Ausgestaltungen kann sich der Aktivierungszustand auch auf mehrere aufeinanderfolgende Aktivierungsphasen bzw. Betriebsphasen beziehen, wobei jede Aktivierungsphase bzw. Betriebsphase einen Übergang vom deaktivierten Zustand in den Aktivierungszustand umfasst, und wobei die Dauer, d.h. die zeitliche Dauer, der Betriebsphasen aufsummiert bzw. akkumuliert wird. Bei aufeinanderfolgenden, akkumulierten Aktivierungsphasen sind diese insbesondere jeweils durch eine Deaktivierungsphase unterbrochen, in welcher der Aktuator deaktiviert ist. Bei solchen Ausgestaltungen wird vorteilhafterweise die akkumulierte Zeitdauer der Aktivierungsphasen als die Dauer des Aktivierungszustands verwendet. Wird lediglich jeweils nur eine Betriebsphase berücksichtigt, entspricht die akkumulierte Zeitdauer vorteilhafterweise der jeweiligen Dauer des Aktivierungszustands. Bei akkumulierter Zeitdauer wird entsprechend gemäß Schritt d) der Aktuator deaktiviert, wenn die akkumulierte Zeitdauer für ein vorgegebenes erstes Zeitintervall den Grenzwert überschreitet.

Mit der akkumulierten Zeitdauer können insbesondere unsachgemäße Betätigungssituationen erfasst werden, bei welchen der Aktuator mehrmals oder vielmals kurz hintereinander aktiviert wird, ohne dass jeweilige Aktivierungsphasen für sich genommen den Grenzwert gemäß Schritt d) überschreiten, in Summe jedoch zu einer Überlastung bzw. Überhitzung des Aktuators führen können.

Gemäß einer weiteren vorteilhaften Ausgestaltung kann vorgesehen sein, dass die ermittelte Dauer des Aktivierungszustands, insbesondere die durch einen Betriebszeitzähler oder Timer ermittelte Dauer des Aktivierungszustands, zurückgesetzt wird, beispielsweise auf null, wenn durch die Steuerungseinheit ein Übergang vom Aktivierungszustand in den deaktivierten Zustand ermittelt oder erkannt wird, und/oder wenn die Steuerungseinheit innerhalb eines zweiten Zeitintervalls keinen weiteren Übergang in den Aktivierungszustand erkennt bzw. feststellt. Bei der ersten Alternative kann der Betriebszeitzähler insbesondere immer dann zurückgesetzt werden, wenn eine benutzerinitiierte Betätigung und Aktivierung des Aktuators zur Verstellung der Lenksäule beendet ist bzw. wird. Dabei kann jede benutzerinitiierte Betätigung als solche hinsichtlich der Überschreitung des Grenzwerts überwacht werden. Bei akkumulierten Zeitdauern kann eine Zurücksetzung des Betriebszeitzählers insbesondere dann erfolgen, wenn für die Dauer des zweiten Zeitintervalls keine Aktivierung, d.h. insbesondere kein Übergang in den Aktivierungszustand, festgestellt wird. Das zweite Zeitintervall kann insbesondere durch Tests, Versuche oder empirisch ermittelt werden, insbesondere derart, dass das zweite Zeitintervall einer Zeitspanne entspricht, die ausreichend ist, damit sich der Aktuator abkühlen kann. Die zweite Zeitdauer kann insbesondere zwischen 10 Minuten und 20 Minuten, insbesondere bei 15 Minuten liegen, und insbesondere durch Tests, Berechnungen und/oder empirisch ermittelt werden.

Gemäß einer weiteren vorteilhaften Ausgestaltung kann vorgesehen sein, dass das Verfahren eine Initialisierung der Steuerungseinheit umfasst, und die Steuerungseinheit nach erfolgter Initialisierung bei jeder Ausführung des Schritts d) einen Zähler inkrementiert, und die Steuerungseinheit eine Aktivierung des Aktuators bis zu einer nächsten Initialisierung blockiert, wenn der Zähler einen vorgegebenen Maximalwert übersteigt. Eine Initialisierung kann insbesondere erfolgen beim Starten eines Kraftfahrzeugs, insbesondere einem Starten oder einem Startversuch bzw. einer Initialisierung des Antriebsmotors des Kraftfahrzeugs. Die Verwendung des Zählers für eine jeweilige Initialisierung hat den Vorteil, dass der Aktuator vor Beschädigungen, insbesondere vor Überhitzung, in Folge wiederholter Fehlbedienung oder unsachgemäßer Betätigung geschützt werden kann. Durch Blockieren des Aktuators, insbesondere durch eine Deaktivierung weiterer Betätigungen während eines laufenden Initialisierungszyklus, kann ein Benutzer gleichzeitig, zumindest indirekt, auf die unsachgemäße Betätigung oder Benutzung der Lenksäulenverstellvorrichtung hingewiesen werden. In diesem Zusammenhang kann vorteilhafterweise vorgesehen sein, dass bei jeder Initialisierung bzw. Neuinitialisierung der Steuerungseinheit der Zähler zurückgesetzt wird, insbesondere auf null zurückgesetzt wird. Gemäß einer weiteren vorteilhaften Ausgestaltung kann vorgesehen, sein, dass ein Blockieren und/oder ein Deaktivieren des Aktuators einem Benutzer auf einer Benutzerschnittstelle angezeigt wird, und/oder dass ein anderweitiges optisches, akustisches und/oder haptisches Signal erzeugt wird. Ein entsprechendes Signal kann insbesondere durch die Steuerungseinheit zumindest initiiert werden.

Der Maximalwert kann insbesondere im Bereich zwischen 3 und 5 liegen, insbesondere bei 3. Der Maximalwert kann insbesondere durch Tests, Versuche oder empirisch ermittelt werden.

Gemäß einer weiteren vorteilhaften Ausgestaltung ist eine Lenksäulenverstelleinrichtung mit einer Steuerungseinheit und mit zumindest einem Aktuator vorgesehen, wobei der Aktuator eingerichtet ist zur Verstellung einer Position und/oder Ausrichtung einer oder mehrerer Komponenten einer Lenksäule eines Kraftfahrzeugs. Die Steuerungseinheit kann einen zugeordneten nichtflüchtigen Speicher mit darauf gespeicherten, durch die Steuerungseinheit ausführbaren Instruktionen umfassen, und/oder eine ausführbare Logik umfassen, welche bei Ausführung durch die Steuerungseinheit ein Verfahren nach einer der hierin beschriebenen Ausgestaltungen bewirkt.

Gemäß einer weiteren vorteilhaften Ausgestaltung ist eine Steuerungseinheit vorgesehen, die einen zugeordneten nichtflüchtigen Speicher mit darauf gespeicherten, durch die Steuerungseinheit ausführbaren Instruktionen umfasst und/oder eine ausführbare Logik umfasst, wobei die Instruktionen beziehungsweise die Logik bei Ausführung durch die Steuerungseinheit ein Verfahren nach einer der hierin beschriebenen Ausgestaltungen bewirkt.

Gemäß einer weiteren vorteilhaften Ausgestaltung ist ein Kraftfahrzeug mit einer Lenksäulenverstelleinrichtung nach einer der hierin beschriebenen Ausgestaltungen vorgesehen. Vorteilhafterweise ist ferner ein Kraftfahrzeug mit einer Steuerungseinheit nach einer hierin beschriebenen Ausgestaltung vorgesehen. Ein entsprechendes Kraftfahrzeug hat, wie üblich, eine Lenksäule, mit welcher die Lenksäulenverstelleinrichtung bzw. die Steuerungseinheit zusammenwirkt.

Gemäß einer weiteren vorteilhaften Ausgestaltung kann vorgesehen sein, dass bei dem Kraftfahrzeug die Lenksäulenverstelleinrichtung oder die Steuerungseinheit eingerichtet ist zur Ausführung eines Verfahrens mit Initialisierung eines Zählers, insbesondere wie oben beschrieben, wobei die Initialisierung vorteilhafterweise durch einen Startvorgang des Kraftfahrzeugs oder eines Antriebsmotors zum Antrieb des Kraftfahrzeugs bewirkt wird.

Die Erfindung wird nachstehend anhand von Ausführungsbeispielen unter Bezug auf die beigefügten schematischen Figuren mit weiteren Einzelheiten näher erläutert.

Dabei zeigen
- FIG. 1: eine schematische Darstellung eines Lenkungssystems eines Kraftfahrzeugs, mit einer Lenksäulenverstelleinrichtung; und
- FIG. 2: ein schematisches Ablaufdiagramm eines Verfahrens zur Betriebssteuerung einer Lenksäulenverstelleinrichtung.

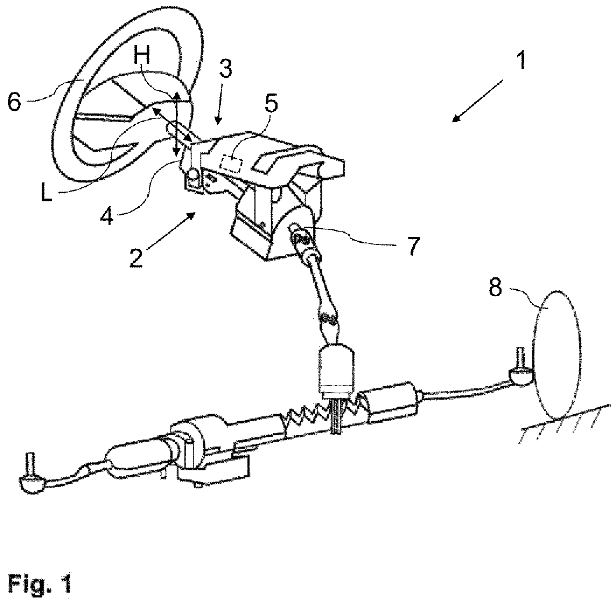

FIG. 1 zeigt eine schematische Darstellung eines Lenkungssystems 1 eines (nicht explizit dargestellten) Kraftfahrzeugs, mit einer Lenksäule 2 und einer Lenksäulenverstelleinrichtung 3. Die Lenksäulenverstelleinrichtung 3 umfasst zumindest einen Aktuator 4, bei dem es sich um einen Elektromotor handeln kann. Ferner umfasst die Lenksäulenverstelleinrichtung 3 zumindest eine lediglich schematisch angedeutete Steuerungseinheit 5, die insbesondere einen Mikroprozessor umfassen kann. Die Steuerungseinheit/en 5 sowie der oder die Aktuatoren 4 können, abweichend von FIG. 1, jeweils an anderer Stelle verbaut sein.

Das Lenkungssystem 1 umfasst, wie üblich, ein Lenkrad 6, das im gezeigten Beispiel über ein Lenkgetriebe 7 in bekannter Weise, jedoch nicht beschränkt darauf, mit den zu lenkenden Rädern 8 verbunden ist.

Der oder die Aktuatoren 4 sind dazu eingerichtet, Position und/oder Ausrichtung, insbesondere Höhe H und/oder Länge L, der Lenksäule 2 zu verstellen, insbesondere relativ zu einem nicht gezeigten Fahrersitz. Gemäß Ausgestaltungen kann vorgesehen sein, dass für jeden Freiheitsgrad der Verstellung, insbesondere Höhe H, Länge L usw., jeweils ein separater Aktuator 4 vorhanden ist, wobei eine gemeinsame Steuereinheit 5 oder jeweils separate Steuerungseinheiten 5 für jeden Aktuator 4 vorhanden sein können.

Die Steuerungseinheit 5 kann dazu eingerichtet sein, den oder die Aktuatoren 4 anzusteuern, zumindest jedoch deren Aktivierungssteuerung zu übernehmen. Unter Aktivierungssteuerung soll dabei verstanden werden, dass die Steuerungseinheit/en 5 zumindest die Aktivierung und Deaktivierung des oder der Aktuatoren 4 steuert bzw. kontrolliert.

Die weitere Beschreibung bezieht sich der Einfachheit halber und ohne Beschränkung der Allgemeinheit auf eine Steuerungseinheit 5 und einen Aktuator 4, wobei, wie oben angedeutet mehrere Aktuatoren 4 und mehrere Steuerungseinheiten 5, im Wesentlichen in beliebiger Kombination, umfasst sein können.

Die Steuerungseinheit 5 ist eingerichtet zur Ausführung eines Verfahrens mit folgenden Schritten:
c. Erkennen, durch die Steuerungseinheit 3, eines Übergangs des Aktuators 4 von einem deaktivierten Zustand zu einem Aktivierungszustand, in welchem der Aktuator 4 zum Zwecke der Verstellung der Position und/oder Ausrichtung, insbesondere von Höhe H und/oder Länge L, des Lenkrads 6 bzw. der Lenksäule 2, betrieben wird, und
d. Deaktivieren des Aktuators 4 durch die Steuerungseinheit 5, sobald eine Dauer des Aktivierungszustands einen vorgegebenen Grenzwert überschreitet.

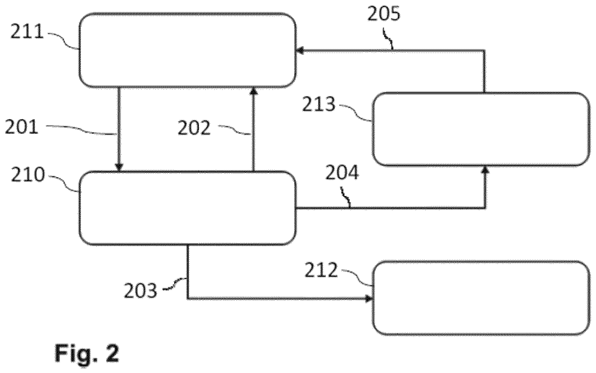

Ein entsprechendes, beispielhaftes Verfahren ist schematisch in dem Ablaufdiagramm der FIG. 2 dargestellt.

Dabei wird im Schritt 201 durch die Steuerungseinheit 4 erkannt, dass der Aktuator 4 zum Zwecke der Verstellung der Position und/oder Ausrichtung aktiviert wird. Entsprechend wird, insbesondere durch eine auf der Steuerungseinheit 4 implementierte Zustandsmaschine, ein Übergang des Aktuators 4 von einem deaktivierten Zustand in einen Aktivierungszustand ermittelt, in welche der Aktuator 4 zum Zwecke der Verstellung von Position und/oder Ausrichtung betrieben werden soll bzw. betrieben wird.

Wird durch die Steuerungseinheit 4 erkannt bzw. festgestellt, dass, insbesondere durch eine entsprechende Benutzeraktion zur Aktivierung der Lenksäulenverstelleinrichtung, ein Übergang des Aktuators 4 in den Aktivierungszustand vorliegt, geht das Verfahren über zu Verfahrensblock 210.

Im Verfahrensblock 210 wird ein auf der Steuerungseinheit implementierter Timer inkrementiert. Die vom Timer ermittelte Zeitdauer entspricht der Dauer des Aktivierungszustands des Aktuators. Erreicht die vom Timer ermittelte Dauer des Aktivierungszustands einen vorgegebenen Grenzwert nicht, bevor der Aktuator 4, insbesondere durch eine entsprechende Benutzeraktion, deaktiviert wird, was durch die Steuerungseinheit 5 im Schritt 202 festgestellt wird, geht das Verfahren über zu Verfahrensblock 211.

Dem Verfahrensblock 211 liegt ein inaktiver Betriebszustand des Aktuators 4 zu Grunde. Auf den Verfahrensblock wird weiter unten noch genauer eingegangen.

Wird im Block 210 durch die Steuerungseinheit 5 ermittelt, dass die Dauer des Aktivierungszustands den Grenzwert überschreitet, so wird ein Zähler inkrementiert, der dazu eingerichtet ist, die Anzahl der Aktivierungen des Aktuators zu zählen, bei welchen der Grenzwert überschritten wird.

Für den Zähler ist ein Maximalwert implementiert, der festlegt, wie oft nach einer Initialisierung der Steuerungseinheit 5, beispielsweise in Rahmen eines Startvorgangs des Kraftfahrzeugs, eine Überschreitung des Grenzwerts auftreten darf.

Liegt bei einer im Block 210 festgestellten Überschreitung des Grenzwerts der Dauer des Aktivierungszustands der Zähler über dem Maximalwert, zweigt das Verfahren gemäß Schritt 203 ab zu Verfahrensblock 212. Gemäß Verfahrensblock 212 wird der Aktuator 4 blockiert, d.h. jede weitere Aktivierung des Aktuators 4 wird blockiert. Die Blockierung wird aufrechterhalten bis zu einer neuen Initialisierung durch einen weiteren Startvorgang.

Liegt bei einer im Block 210 festgestellten Überschreitung des Grenzwerts der Zähler nicht über dem Maximalwert, zweigt das Verfahren gemäß Schritt 204 ab zu Verfahrensblock 213. Gemäß Verfahrensblock 213 wird bei festgestellter Überschreitung des Grenzwerts der Dauer des Aktivierungszustands der Aktuator 4 deaktiviert, wobei die Steuerungseinheit 5 beispielsweise eine Fehler-ID zur Deaktivierung des Aktuators 4 erzeugen kann. Im Unterschied zu Verfahrensblock 212 wird jedoch der Aktuator 4 nicht dauerhaft bis zu einer nächsten Initialisierung deaktiviert, sondern der Aktuator 4 wird lediglich für eine vorgegebene erste Zeitdauer deaktiviert. Die erste Zeitdauer kann insbesondere mittels eines Deaktivierungstimers überwacht werden. Gleichzeitig wird im Verfahrensblock 213 der Timer der zur Ermittlung der Dauer des Aktivierungszustands vorgesehen ist, zurückgesetzt.

Wird durch die Steuerungseinheit 5 im Schritt 205 festgestellt, dass der Deaktivierungstimer die erste Zeitdauer erreicht hat, geht das Verfahren zu Verfahrensblock 211 über. Erreicht das Verfahren den Verfahrensblock 211 über den Verfahrensschritt 205, so setzt die Steuerungseinheit 5 das Verfahren zur Überwachung der Dauer des Aktivierungszustands fort, und geht, wenn im Verfahrensschritt 201 eine Aktivierung des Aktuators festgestellt wird, zu Verfahrensblock 210 über usw.

Bei dem beispielhaften Verfahren ist weiterhin vorgesehen, dass der im Zusammenhang mit Verfahrensblock 210 oben erwähnte Zähler zurückgesetzt wird, falls die Steuerungseinheit 5 für der Aktuator 4 innerhalb eines vorgegebenen zweiten Zeitintervalls, das z.B. durch einen weiteren Timer ermittelt werden kann, keinen Übergang in den Aktivierungszustand, d.h. keine Aktivierung, feststellt. Anders ausgedrückt wird der Zähler zurückgesetzt, wenn der Aktuator für die Dauer des zweiten Zeitintervalls nicht betätigt wird.

Der weitere Timer kann durch die Steuerungseinheit 5 insbesondere aktiviert werden, wenn diese feststellt, dass der Aktuator 4 im inaktiven Zustand ist oder in diesen übergeht. Der weitere Timer wird im Verfahrensblock 210, d.h. bei Übergang zu einem Aktivierungszustand rückgesetzt, und bei Rückkehr zu Verfahrensblock 211 neu initialisiert, so dass der weitere Timer stets die Zeit erfasst, in welcher der Aktuator 4 inaktiv ist. Ferner ist vorgesehen, dass der im Zusammenhang mit Verfahrensblock 210 beschriebe Timer die Dauer aufeinanderfolgender Aktivierungszustände akkumuliert, wobei dieser Timer zurückgesetzt wird, falls das durch den weiteren Timer ermittelte Zeitintervall größer ist, als das zweite Zeitintervall, d.h. wenn der Aktuator 4 mindestens für die Länge des zweiten Zeitintervalls inaktiv war.

Mithin kann bei dem Verfahren vorgesehen sein, dass im Verfahrensblock 211 geprüft wird, ob das durch den weiteren Timer ermittelte bzw. festgestellte Zeitintervall größer ist, als das zweite Zeitintervall. Ist diese Bedingung erfüllt, so ist vorgesehen, dass die Steuerungseinheit 5 im Verfahrensblock 211 den weiteren Timer zurücksetzt und eine neue Inkrementierung initiiert. Ist die vorgenannte Bedingung im Verfahrensblock 211 nicht erfüllt, d.h. ist das Zeitintervall des weiteren Timers, der im inaktiven Zustand des Aktuators 4 fortlaufend inkrementiert wird, kleiner, als das zweite Zeitintervall, wird die Inkrementierung des weiteren Timers fortgesetzt, insbesondere bis die Steuerungseinheit 5 einen Übergang in einen Aktivierungszustand feststellt, wobei in diesem Fall der weitere Timer im Verfahrensblock 210 zurückgesetzt werden kann, oder bis die Steuereinheit nach Überschreiten des zweiten Zeitintervalls den weiteren Timer neu initialisiert. Gleichzeitig wird im Verfahrensblock 211 auch der Timer betreffend die Dauer des Aktivierungszustands zurücksetzt, falls das vom weiteren Timer ermittelte Zeitintervall größer ist, als das zweite Zeitintervall. Ist der Aktuator 4 für die Dauer des zweiten Zeitintervalls inaktiv, so setzt die Steuerungseinheit 5 also vorteilhafterweise die für den Aktivierungszustand des Aktuators akkumulierte Zeit zurück.

Im Zusammenhang mit dem weiteren Timer zur Ermittlung der Zeitdauer, in welcher der Aktuator 4 zusammenhängend inaktiv ist, kann vorgesehen sein, dass im Verfahrensblock 213 der weitere Timer zurückgesetzt wird. In diesem Fall kann der weitere Timer insbesondere zur Ermittlung des Deaktivierungszeitintervalls verwendet werden.

Der in dem Verfahren gemäß der Figuren implementierbare weitere Timer hat den Vorteil, dass die Lenksäulenverstelleinrichtung nicht unnötig oft komplett blockiert wird, denn nach Verstreichen des zweiten Zeitintervalls, das insbesondere zwischen 10 Minuten und 20 Minuten, insbesondere 15 Minuten, betragen kann, wird das System zurückgesetzt und die Überwachung beginnt von Neuem. Dabei wird davon ausgegangen, dass nach Verstreichen des zweiten Zeitintervalls der Aktuator im Wesentlichen mit Sicherheit ausreichend abgekühlt ist, damit ein weiterer Überwachungszyklus ausführbar ist.

Insgesamt zeigt sich, dass das vorgeschlagene Verfahren eine effiziente Überwachung des Aktuators 4 ermöglicht. Insbesondere kann der Aktuator 4 in zweifacher Hinsicht Überwacht werden. Erstens durch Beschränkung der (akkumulierten) Dauer der Aktivierung des Aktuators auf einen vorgegebenen Grenzwert, und zweitens durch die Beschränkung der Anzahl der erlaubten Überschreitungen dieses Grenzwerts pro Initialisierung im Rahmen eines Startvorgangs.

### Bezugszeichenliste

- 1: Lenkungssystem
- 2: Lenksäule
- 3: Lenksäulenverstelleinrichtung
- 4: Aktuator
- 5: Steuerungseinheit
- 6: Lenkrad
- 7: Lenkgetriebe
- 8: Rad

- H: Höhe
- L: Länge
- 201-206: Verfahrensschritte
- 210-213: Verfahrensblöcke

## Patentansprüche

1. Verfahren zum Betrieb einer elektrischen Lenksäulenverstelleinrichtung (3) eines Kraftfahrzeugs, wobei
a. die Lenksäulenverstelleinrichtung (3) zumindest einen zur Verstellung einer Position und/oder Ausrichtung einer oder mehrerer Komponenten einer Lenksäule (2) eines Kraftfahrzeugs eingerichteten elektrischen Aktuator (4), insbesondere einen Elektromotor, umfasst, und
b. die Lenksäulenverstelleinrichtung (3) zumindest eine Steuerungseinheit (5) zur Aktivierungssteuerung des zumindest einen Aktuators (4) aufweist, und
wobei das Verfahren die folgenden Schritte umfasst:
c. Erkennen (201), durch die Steuerungseinheit (5), eines Übergangs des Aktuators (4) von einem deaktivierten Zustand zu einem Aktivierungszustand, in welchem der Aktuator (4) zum Zwecke der Verstellung der Position und/oder Ausrichtung betrieben wird bzw. betreibbar ist, und
d. Deaktivieren des Aktuators (4) durch die Steuerungseinheit (5), sobald eine Dauer des Aktivierungszustands einen vorgegebenen Grenzwert überschreitet.

2. Verfahren nach Anspruch 1, wobei der Übergang in den Aktivierungszustand auf Grundlage eines Ansteuersignals zur Aktivierung des Aktuators (4) erkannt wird.

3. Verfahren nach einem der vorangehenden Ansprüche, wobei der Aktuator (4) im Schritt d) für ein vorgegebenes Deaktivierungszeitintervall deaktiviert wird.

4. Verfahren nach einem der vorangehenden Ansprüche, wobei die Dauer des Aktivierungszustands durch die Steuerungseinheit (5) überwacht wird und/oder die Dauer durch einen in der Steuerungseinheit (5) implementierten Betriebszeitzähler ermittelt wird, wobei der Betriebszeitzähler vorzugsweise dadurch aktiviert wird, dass die Steuerungseinheit (5) einen Übergang des Aktuators (4) von einem deaktivierten Zustand in den Aktivierungszustand feststellt, und in Reaktion auf eine entsprechende Feststellung den Betriebszeitzähler aktiviert.

5. Verfahren nach einem der vorangehenden Ansprüche, wobei der Aktivierungszustand eine oder mehrere Aktivierungsphasen des Aktuators (4) umfasst, wobei die Dauer des Aktivierungszustands einer akkumulierten Zeitdauer der Aktivierungsphasen entspricht, wobei der Aktuator (4) gemäß Schritt d) deaktiviert wird, wenn die akkumulierte Zeitdauer für ein vorgegebenes erstes Zeitintervall den Grenzwert überschreitet.

6. Verfahren nach einem der vorangehenden Ansprüche, wobei die Dauer des Aktivierungszustands zurückgesetzt wird, wenn durch die Steuerungseinheit (5) ein Übergang vom Aktivierungszustand in den deaktivierten Zustand ermittelt wird, und/oder wenn innerhalb eines zweiten Zeitintervalls kein Übergang in den Aktivierungszustand erkannt wird.

7. Verfahren nach einem der vorangehenden Ansprüche, wobei das Verfahren eine Initialisierung der Steuerungseinheit (5) umfasst, und die Steuerungseinheit (5) nach erfolgter Initialisierung bei jeder Ausführung des Schritts d) einen Zähler inkrementiert, und die Steuerungseinheit (5) eine Aktivierung des Aktuators (4) bis zu einer nächsten Initialisierung blockiert, wenn der Zähler einen vorgegebenen Maximalwert übersteigt.

8. Lenksäulenverstelleinrichtung (3) mit einer Steuerungseinheit (5) und zumindest einem zur Verstellung einer Position und/oder Ausrichtung einer oder mehrerer Komponenten einer Lenksäule (2) eines Kraftfahrzeugs eingerichteten elektrischen Aktuator (4), wobei die Steuerungseinheit (5) einen zugeordneten nichtflüchtigen Speicher mit darauf gespeicherten, durch die Steuerungseinheit ausführbaren Instruktionen umfasst, und/oder eine ausführbare Logik umfasst, welche bei Ausführung durch die Steuerungseinheit (5) ein Verfahren nach einem der Ansprüche 1 bis 7 bewirkt.

9. Steuerungseinheit (5) umfassend einen zugeordneten nichtflüchtigen Speicher mit darauf gespeicherten, durch die Steuerungseinheit (5) ausführbaren Instruktionen und/oder umfassend eine ausführbare Logik, welche bei Ausführung durch die Steuerungseinheit (5) ein Verfahren nach einem der Ansprüche 1 bis 7 bewirken beziehungsweise bewirkt.

10. Kraftfahrzeug mit einer Lenksäulenverstelleinrichtung (3) nach Anspruch 8 oder einer Steuerungseinheit (5) nach Anspruch 9.

11. Kraftfahrzeug nach Anspruch 10, wobei die Lenksäulenverstelleinrichtung (3) oder die Steuerungseinheit (5) eingerichtet ist zur Ausführung eines Verfahrens nach einem der Ansprüche 1 bis 7, insbesondere eines Verfahrens nach Anspruch 7, und wobei die Initialisierung durch einen Startvorgang des Kraftfahrzeugs bewirkt wird.
